# EUROPÄISCHE PATENTSCHRIFT

(11) **EP 1 285 029 B1**
(45) Veröffentlichungstag und Bekanntmachung des Hinweises auf die Patenterteilung: **03.03.2004**
(21) Anmeldenummer: 01936359.7
(22) Anmeldetag: 15.05.2001
(51) Int. Cl.: C09B 67/46, C09B 67/20, C09D 11/00

(54) **PIGMENTZUBEREITUNGEN, ENTHALTEND ALKOXYLIERTES POLYETHYLENIMIN**
PIGMENT PREPARATIONS THAT CONTAIN ALKOXYLATED POLYETHYLENIMINE
PREPARATIONS PIGMENTAIRES CONTENANT DE LA POLYETHYLENIMINE ALCOXYLEE

(30) Priorität: 27.05.2000 DE 10026466
(43) Veröffentlichungstag der Anmeldung: 26.02.2003
(73) Patentinhaber: BASF AKTIENGESELLSCHAFT, 67056 Ludwigshafen (DE)
(72) Erfinder: BORZYK, Oliver, 67346 Speyer (DE); HUFF, Jürgen, 67063 Ludwigshafen (DE); MIELKE, Manfred, 69118 Heidelberg (DE); SENS, Rüdiger, 67069 Ludwigshafen (DE)
(86) Internationale Anmeldenummer: PCT/EP2001/005490
(87) Internationale Veröffentlichungsnummer: WO 2001/092421

(56) Entgegenhaltungen:
- EP-A- 0 359 034
- EP-A- 0 514 159
- EP-A- 0 622 429
- WO-A-99/67352
- US-A- 4 789 400
- US-A- 5 017 644
- US-A- 5 364 462
- US-A- 5 958 999
- US-A- 5 968 244
- DATABASE WPI Section Ch, Week 199436 Derwent Publications Ltd., London, GB; Class A14, AN 1994-291123 XP002175008 & JP 06 220395 A (NIPPON SHOKUBAI CO LTD), 9. August 1994 (1994-08-09)
- PATENT ABSTRACTS OF JAPAN vol. 1998, no. 08, 30. Juni 1998 (1998-06-30) & JP 10 060352 A (KAO CORP), 3. März 1998 (1998-03-03) in der Anmeldung erwähnt

## Beschreibung

Die vorliegende Erfindung betrifft neue Pigmentzubereitungen, enthaltend
A) mindestens ein organisches oder anorganisches Pigment und
B) mindestens ein Polyethylenimin, das ethoxyliert und propoxyliert und/oder butoxyliert ist und das pro Mol N-H-Funktion 1 bis 10 mol Propylenoxid -oder Butylenoxideinheiten und 10 bis 40 mol Ethylenoxideinheiten aufweist, wobei das Polyethylenimin vor der Alkoxylierung ein mittleres Molekulargewicht M_{w} von 600 bis 25 000 g/mol aufweist.

Weiterhin betrifft die Erfindung die Verwendung dieser Pigmentzubereitungen zur Herstellung von wäßrigen Pigmentdispersionen, Tinten, Druckfarben und Lacken sowie Pigmentzubereitungen für das Ink-Jet-Verfahren.

Beim Einsatz von Pigmenten, d.h. Farbmitteln, die im Anwendungsmedium ungelöst vorliegen, ist in der Regel die Anwesenheit von Dispergiermitteln erforderlich, da die Pigmentteilchen aufgrund wechselseitiger Anziehungskräfte zur Agglomeration bzw. Flokkulation neigen, was sich durch höhere Viskositäten oder verschlechterte koloristische Eigenschaften, insbesondere zu geringe Farbstärke oder mangelnde Brillanz, bemerkbar macht. Durch die als oberflächenaktive Stoffe wirkenden Dispergiermittel werden die Grenzflächenspannung zwischen den Teilchen und die Dispergierarbeit, die zur Zerteilung von Teilchen aufgebracht werden muß, wesentlich erniedrigt.

Tinten für das Ink-Jet-Verfahren erfordern eine besonders gute Dispergierung der Pigmentteilchen und Stabilisierung der Pigmentdispersion, um eine Verstopfung der Druckerdüse während des Druckvorgangs und auch in Stillstandzeiten zu vermeiden sowie eine ausreichende Lagerstabilität sicherzustellen. Besondere Anforderungen bestehen auch bei der Herstellung von Rußdispersionen, da die Rußpartikel in der Regel noch feiner sind als die Buntpigmente.

Aus der WO-A-99/38053 sind Ink-Jet-Tinten auf Basis durch organische Gruppen oberflächenmodifizierter Rußpigmente bekannt, die zur Verbesserung der Naßechtheit hydroxyethylierte, ethoxylierte, hydroxypropylierte oder nichtderivatisierte Polyethylenimine enthalten.

EP-A 0 514 159 beschreibt die Verwendung von Polyoxyalkylen-polyalkylen-polyaminen der Formel (C₂H₄N)ₙ-(PO)ₓ-(EO)_{y}-OH und von Polyoxyalkylen-polyalkylen-polyiminen der Formel (C₂H₄N)ₙ-C₂H₄N-((AO)ₓ-(EO)_{y}-OH)₂ in Ink-Jet-Tinten.

JP 6220395 beschreibt Ink-Jet-Tinten, enthaltend Dispergiermittel auf Basis von oxalkylierten Polyiminen, wobei in den Dispergiermitteln pro primärer oder sekundärer Aminofunktion 0,1 bis 5 mol Alkylenoxid addiert worden sind.

In der JP-A-060 352/1998 sind für den Druck auf Overheadprojektorfolien geeignete Ink-Jet-Tinten beschrieben, die zusätzlich zu einem Dispergiermittel auf Acrylatbasis nichtmodifizierte Polyethylenimine oder Polyacrylsäure/Polyethylenimin-Copolymerisate zur Fixierung des Drucks auf den Folien enthalten.

Aufgabe der vorliegenden Erfindung war es, neue Pigmentzubereitungen bereitzustellen, welche vorteilhafte Anwendung bei der Herstellung von wäßrigen Pigmentdispersionen, Tinten, insbesondere auch für das Ink-Jet-Verfahren, Druckfarben und Lacken im Ink-Jet-Verfahren finden können und nicht eine zusätzliche Oberflächenmodifizierung der Pigmentoberfläche oder die Anwesenheit weiterer Hilfsmittel erfordern.

Demgemäß wurden die eingangs definierten Pigmentzubereitungen gefunden.

Die erfindungsgemäßen Pigmentzubereitungen enthalten als Komponente (A) ein organisches oder anorganisches Pigment. Als organisches Pigment sind hierbei auch Küpenfarbstoffe zu verstehen. Selbstverständlich können die erfindungsgemäßen Pigmentzubereitungen auch Mischungen verschiedener organischer oder verschiedener anorganischer Pigmente oder organischer und anorganischer Pigmente enthalten.

### Beispiele für geeignete Pigmente (A) sind dabei:

### Organische Pigmente:

- Monoazopigmente:
   C.I. Pigment Brown 25;
   C.I. Pigment Orange 5, 13, 36 und 67;
   C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251;
   C.I. Pigment Yellow 1, 3, 73, 74, 65, 97, 151 und 183;
- Disazopigmente:
   C.I. Pigment Orange 16, 34 und 44;
   C.I. Pigment Red 144, 166, 214 und 242;
   C.I. Pigment Yellow 12, 13, 14, 16, 17, 81, 83, 106, 113, 126, 127, 155, 174, 176 und 188;
- Anthanthronpigmente:
   C.I. Pigment Red 168
      (C.I. Vat Orange 3) ;
- Anthrachinonpigmente:
   C.I. Pigment Yellow 147 und 177;
   C.I. Pigment Violet 31;
- Anthrapyrimidinpigmente:
   C.I. Pigment Yellow 108
      (C.I. Vat Yellow 20);
- Chinacridonpigmente:
   C.I. Pigment Red 122, 202 und 206;
   C.I. Pigment Violet 19;
- Chinophthalonpigmente:
   C.I. Pigment Yellow 138;
- Dioxazinpigmente:
   C.I. Pigment Violet 23 und 37;
- Flavanthronpigmente:
   C.I. Pigment Yellow 24
      (C.I. Vat Yellow 1);
- Indanthronpigmente:
   C.I. Pigment Blue 60
      (C.I. Vat Blue 4)
      und 64 (C.I. Vat Blue 6);
- Isoindolinpigmente:
   C.I. Pigment Orange 69;
   C.I. Pigment Red 260;
   C.I. Pigment Yellow 139 und 185;
- Isoindolinonpigmente:
   C.I. Pigment Orange 61;
   C.I. Pigment Red 257 und 260;
   C.I. Pigment Yellow 109, 110, 173 und 185;
- Isoviolanthronpigmente:
   C.I. Pigment Violet 31
      (C.I. Vat Violet 1);
- Metallkomplexpigmente:
   C.I. Pigment Yellow 117, 150 und 153;
   C.I. Pigment Green 8;
- Perinonpigmente:
   C.I. Pigment Orange 43
      (C.I. Vat Orange 7);
   C.I. Pigment Red 194
      (C.I. Vat Red 15);
- Perylenpigmente:
   C.I. Pigment Black 31 und 32;
   C.I. Pigment Red 123, 149, 178, 179
      (C.I. Vat Red 23),
      190 (C.I. Vat Red 29) und 224;
   C.I. Pigment Violet 29;
- Phthalocyaninpigmente:
   C.I. Pigment Blue 15, 15:1, 15:2, 15:3, 15:4, 15:6 und 16;
   C.I. Pigment Green 7 und 36;
- Pyranthronpigmente:
   C.I. Pigment Orange 51;
   C.I. Pigment Red 216
      (C.I. Vat Orange 4)
- Thioindigopigmente:
   C.I. Pigment Red 88 und 181
      (C.I. Vat Red 1);
   C.I. Pigment Violet 38
      (C.I. Vat Violet 3) ;
- Triarylcarboniumpigmente:
   C.I. Pigment Blue 1, 61 und 62;
   C.I. Pigment Green 1;
   C.I. Pigment Red 81, 81:1 und 169;
   C.I. Pigment Violet 1, 2, 3 und 27
- C.I. Pigment Black 1 (Anilinschwarz);
- C.I. Pigment Yellow 101 (Aldazingelb);
- C.I. Pigment Brown 22;

### Küpenfarbstoffe (außer den bereits oben genannten) :

- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

### anorganische Pigmente:

- Weißpigmente:
   Titandioxid (C.I. Pigment White 6), Zinkweiß, Farbenzinkoxid; Zinksulfid, Lithopone; Bleiweiß;
- Schwarzpigmente:
   Eisenoxidschwarz (C.I. Pigment Black 11), Eisen-Mangan-Schwarz, Spinellschwarz (C.I. Pigment Black 27); Ruß (C.I. Pigment Black 7) ;
- Buntpigmente:
   Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau; Eisenblau (C.I. Pigment Blue 27); Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange;
   Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulf id (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente:
   Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße (insbesondere Gas- oder Ofenruße) zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Die erfindungsgemäßen Pigmentzubereitungen enthalten als Komponente (B) ein oder mehrere Polyethylenimine, die ethoxyliert und propoxyliert oder ethoxyliert und butoxyliert oder ethoxyliert, propoxyliert und butoxyliert sind, als Dispergiermittel..

Vorzugsweise wurde das Polyethylenimin zunächst propoxyliert oder butoxyliert und anschließend ethoxyliert.

Bevorzugt sind Polyethylenimine (B), die pro mol NH-Funktion 1 bis 10 mol, insbesondere 1 bis 6 mol, vor allem 2 bis 5 mol, Propylenoxid- oder Butylenoxideinheiten aufweisen.

Der Ethylenoxidgehalt der Polyethylenimine (B) beträgt bevorzugt 10 bis 40 mol, besonders bevorzugt 15 bis 35 mol, ganz besonders bevorzugt 20 bis 30 mol, Ethylenoxideinheiten pro mol NH-Funktion.

Besonders geeignet sind Polyethylenimine, die mindestens 12, insbesondere 20 bis 45, vor allem 25 bis 40 mol, Alkylenoxideinheiten pro mol enthalten.

In der Regel weist das die Komponente (B) bildende Polyethylenimin vor der Alkoxylierung ein mittleres Molekulargewicht M_{w} von 600 bis 25000 g/mol, bevorzugt 1200 bis 20000 g/mol, besonders bevorzugt 2000 bis 5000 g/mol und ganz besonders bevorzugt etwa 3000 g/mol auf.

Die Polyethylenimine (B) sind aus der WO-A-99/67352 bekannt und können, wie dort beschrieben, hergestellt werden.

Üblicherweise enthalten die erfindungsgemäßen Pigmentzubereitungen, bezogen auf das Gewicht des Pigmentes (A), 5 bis 200 Gew.-%, insbesondere 20 bis 100 Gew.-%, Dispergiermittel (B).

Durch das Dispergiermittel (B) können sehr feinteilige Pigmentdispersionen, insbesondere auch sehr feinteilige Rußdispersionen, dauerhaft stabilisiert werden. In der Regel haben 95%, bevorzugt 99%, der Pigmentteilchen (A) eine Teilchengröße ≤ 1 µm, vorzugsweise ≤ 0,5 µm.

Die erfindungsgemäßen Pigmentzubereitungen eignen sich vorteilhaft zur Herstellung von wäßrigen Pigmentdispersionen, Tinten (Schreibtinten und insbesondere Ink-Jet-Tinten), Druckfarben, Lacken und Tonern.

Vorzugsweise werden Pigment (A) und Dispergiermittel (B) dabei in dem jeweiligen Anwendungsmedium miteinander vermischt. Handelt es sich um flüssige Anwendungsmedien, werden zur Dispergierung zweckmäßigerweise Dissolver (Vordispergierung) und Kugelmühlen (Feindispergierung), wie Perlmühlen, Hochleistungsmühlen mit kleinen Mahlkörpern, z.B. Doppelperlzylinderperlmühlen, und Zentrifugalwirbelbettmühlen eingesetzt.

Besondere Bedeutung haben die erfindungsgemäßen Pigmentzubereitungen zur Herstellung von Ink-Jet-Tinten.

Die ebenfalls erfindungsgemäßen Pigmentzubereitungen für das Ink-Jet-Verfahren (im folgenden kurz "Ink-Jet-Tinten") enthalten
A) mindestens ein organisches oder anorganisches Pigment,
B) mindestens ein Dispergiermittel auf der Basis von Polyethylenimin, das ethoxyliert und propoxyliert und/oder butoxyliert ist, und
C) ein wäßriges Tintenmedium.

Das wäßrige Tintenmedium (C) enthält dabei als Hauptkomponente Wasser (C1), das bevorzugt im Gemisch mit einem oder mehreren schwerverdampfbaren (d.h., in der Regel einen Siedepunkt > 100°C aufweisenden) und damit eine wasserrückhaltende Wirkung besitzenden organischen Lösungsmitteln (C2), die in Wasser löslich oder mit Wasser mischbar sind, vorliegt.

Als organisches Lösungsmittel (C2) werden dabei vorzugsweise ein oder mehrere Lösungsmittel aus der Gruppe Polytetrahydrofuran mit einem mittleren Molekulargewicht M_{w} von 150 bis 500 g/mol, mehrwertige Alkohole, Polyethylen- und Polypropylenglykole und deren Monoalkylether, Pyrrolidon und N-Alkylpyrrolidone eingesetzt.

Besonders geeignete erfindungsgemäße Ink-Jet-Tinten enthalten Polytetrahydrofuran als Bestandteil der organischen Lösungsmittelkomponente (C2). Dabei sind Polytetrahydrofurane mit einem mittleren Molekulargewicht M_{w} von 200 bis 300 g/mol bevorzugt und von etwa 250 g/mol (entsprechend einer Molekulargewichtsverteilung von 225 bis 275 g/mol; Poly-THF 250, BASF) besonders bevorzugt.

Das Polytetrahydrofuran kann auf bekannte Weise über kationische Polymerisation von Tetrahydrofuran hergestellt werden. Dabei entstehen lineare Polytetramethylenglykole.

Das Polytetrahydrofuran kann mit einem oder mehreren (z.B. zwei, drei oder vier) organischen Lösungsmitteln gemischt werden.

Als weitere organische Lösungsmittel (C2) eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weiterhin als Lösungsmittel (C2) geeignet sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Außerdem eignen sich Pyrrolidon und N-Alkylpyrrolidone, deren Alkylkette vorzugsweise 1 bis 4, vor allem 1 bis 2, Kohlenstoffatome enthält, als Lösungsmittel (C2). Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel (C2) sind die oben beschriebenen Polytetrahydrofurane, 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Die Lösungsmittelkomponente (C2) kann vorteilhaft durch Harnstoff (in der Regel in Mengen von 0,5 bis 3 Gew.-%, bezogen auf das Gewicht der Ink-Jet-Tinte) ergänzt werden, der die wasserrückhaltende Wirkung des Lösungmittelgemisches (C2) noch verstärkt.

Die erfindungsgemäßen Ink-Jet-Tinten enthalten in der Regel 0,1 bis 40 Gew.-%, bevorzugt 5 bis 30 Gew.-%, besonders bevorzugt 10 bis 25 Gew.-% und ganz besonders bevorzugt 10 bis 20 Gew.-%, organische Lösungsmittelkomponente (C2).

Vorzugsweise wird ein Gemisch von organischen Lösungsmitteln (C2) eingesetzt, bei dem das Gewichtsverhältnis Polytetrahydrofuran zu weiterem Lösungsmittel 1 : 20 bis 1 : 1 beträgt. Die erfindungsgemäßen Ink-Jet-Tinten enthalten dementsprechend bevorzugt 0,5 bis 20 Gew.-%, insbesondere 1 bis 10 Gew.-%, Polytetrahydrofuran und 1 bis 30 Gew.-%, insbesondere 1 bis 20 Gew.-%, weiteres Lösungsmittel (C2).

Wasser stellt den Hauptbestandteil (C1) der erfindungsgemäßen Ink-Jet-Tinten dar. Sein Gehalt beträgt üblicherweise 50 bis 95 Gew.-%, bevorzugt 60 bis 80 Gew.-%.

Das Pigment (A) ist in der Regel in Mengen von Regel 0,01 bis 20 Gew.-%, bevorzugt 0,2 bis 10 Gew.-%, besonders bevorzugt 1 bis 6 Gew.-%, in den erfindungsgemäßen Ink-Jet-Tinten enthalten.

Außerdem weisen die erfindungsgemäßen Ink-Jet-Tinten einen Gehalt von in der Regel 0,1 bis 25 Gew.-%, bevorzugt von 0,5 bis 10 Gew.-%, an Dispergiermittel (B) auf.

Selbstverständlich können die erfindungsgemäßen Ink-Jet-Tinten weitere Hilfsmittel, wie sie insbesondere für (wäßrige) Ink-Jet-Tinten und in der Druck- und Lackindustrie üblich sind, enthalten. Genannt seien z.B. Konservierungsmittel (wie 1,2-Benzisothiazolin-3-on und dessen Alkalimetallsalze, Glutardialdehyd und/oder Tetramethylolacetylendiharnstoff); Antioxidantien; Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken) ; Mittel zur Regulierung der Viskosität; Verlaufshilfsmittel; Benetzer, die in Mengen von 0,5 bis 5 Gew.-% zur Herabsetzung der Oberflächenspannung der Tinte eingesetzt werden können (z.B. benetzend wirkende Tenside auf der Basis von ethoxylierten oder propoxylierten Fettoder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten oder Alkylphenylphosphaten); Antiabsetzmittel; Glanzverbesserer; Gleitmittel; Haftverbesserer; Hautverhinderungsmittel; Mattierungsmittel; Emulgatoren; Stabilisatoren; Hydrophobiermittel; Lichtschutzadditive; Griffverbesserer; Antistatikmittel und Basen wie Triethanolamin zur Regulierung des pH-Wertes. Wenn diese Mittel Bestandteil der erfindungsgemäßen Ink-Jet-Tinten sind, beträgt ihre Gesamtmenge in der Regel ≤ 5 Gew.-%, vor allem ≤ 2 Gew.-%, insbesondere ≤ 1 Gew.-%, bezogen auf das Gewicht der Ink-Jet-Tinte.

Die erfindungsgemäßen Ink-Jet-Tinten weisen üblicherweise eine dynamische Viskosität von 1 bis 5 mm²/sec, vorzugsweise von 1 bis 3 mm²/sec, auf.

Die Oberflächenspannung der erfindungsgemäßen Ink-Jet-Tinten beträgt in der Regel 20 bis 70 mN/m, bevorzugt 25 bis 40 mN/m. Der pH-Wert der erfindungsgemäßen Ink-Jet-Tinten liegt im allgemeinen bei 5 bis 10, vorzugsweise bei 7 bis 9.

Bei der Herstellung der erfindungsgemäßen Ink-Jet-Tinten geht man zweckmäßigerweise wie folgt vor:

Man mischt das Pigment (A) , beispielsweise in Form eines wasserhaltigen Preßkuchens, zusammen mit dem Dispergiermittel (B) in Gegenwart von Wasser und dispergiert in einer geeigneten Apparatur vor. Die resultierende Mischung mahlt man anschließend in einer Mühle, um die gewünschte Teilchengrößenverteilung (in der Regel ≤ 1 µm, bevorzugt ≤ 0,5 µm) zu erreichen. Nach Einstellung der gewünschten Farbmittelkonzentration durch Zugabe von Lösungsmittel (C2), Wasser und gegebenenfalls weiteren Hilfsmitteln filtriert man mit einer Filtriervorrichtung mit Feinabtrennung im Bereich von 1 bis 0,5 µm.

Die erfindungsgemäßen Ink-Jet-Tinten können vorteilhaft zum Bedrucken von flächigen oder dreidimensional gestalteten Substraten in Ink-Jet-Verfahren eingesetzt werden, welches dadurch gekennzeichnet ist, daß man die Ink-Jet-Tinten auf das Substrat aufdruckt und den erhaltenen Druck gewünschtenfalls anschließend fixiert.

Beim Ink-Jet-Verfahren werden die üblicherweise wäßrigen Tinten in kleinen Tröpfchen direkt auf das Substrat gesprüht. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Ink-Jet-Tinten für das Bubble-Jet-Verfahren und für das Verfahren mittels eines piezoelektrischen Kristalls.

Ist eine Fixierung des Drucks erwünscht, so kann man auf bekannte Weise und wie in der WO-A-99/01516 beschrieben vorgehen und z.B. ein Bindemittel, gewünschtenfalls in Form einer Dispersion oder Emulsion, auf das bedruckte Substrat auftragen und härten oder eine Folie auflamieren.

Weitere Einzelheiten zu diesen Bindemitteln sind der WO-A-99/01516 zu entnehmen.

Die erfindungsgemäßen Ink-Jet-Tinten können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika
genannt.

Das Substratmaterial kann dabei flächig oder dreidimensional gestaltet sein und sowohl vollflächig als auch bildmäßig mit den erfindungsgemäßen Ink-Jet-Tinten bedruckt werden.

Die erfindungsgemäßen Ink-Jet-Tinten zeichnen sich durch insgesamt vorteilhafte Anwendungseigenschaften, vor allem gutes Anschreibverhalten, gutes Dauerschreibverhalten (Kogation) und hohe Lagerstabilität, aus und ergeben Druckbilder hoher Qualität, d.h., hoher Brillanz und Farbtiefe sowie hoher Reib-, Licht-, Wasser- und Naßreibechtheit. Besonders geeignet sind sie zum Drucken auf gestrichenes und ungestrichenes Papier.

### Beispiele

Herstellung der erfindungsgemäß eingesetzten alkoxylierten Polyethylenimine (Dispergiermittel B)

Die Herstellung soll am Beispiel von PEI3000/3PO/27EO dargestellt werden, die weiteren alkoxylierten Polyethylenimine wurden analog hergestellt.

86 g einer 50 gew.-%igen wäßrigen Lösung von Polyethylenimin (M_{w} 3000 g/mol, entsprechend 1 mol, bezogen auf Ethylenimin) wurden in einem druckdichten Reaktor vorgelegt und nach dreimaligem Spülen mit Stickstoff und Verschließen des Reaktors unter Rühren auf 90°C erhitzt. Dann wurden 58 g (1 mol) Propylenoxid aufgepreßt. Der Ansatz wurde bis zur Druckkonstanz gerührt und anschließend auf 80°C abgekühlt.

Nach Entspannen des Reaktors und erneutem dreimaligen Spülen mit Stickstoff wurden 8,6 g einer 50 gew.-%igen wäßrigen Kaliumhydroxidlösung und 400 g Xylol zugegeben. Nach Aufsetzen eines Rückflußkühlers wurde der Ansatz am Wasserkreiser unter Xylolrückfluß erhitzt, bis das Xylol im Wasserauskreiser klar war (ca. 5 h). Anschließend wurden zunächst 116 g (2 mol) Propylenoxid bei 140-145°C und einem Druck bis 8 bar zudosiert. Nach Rühren bis zur Druckkonstanz wurden 1188 g (27 mol) Ethylenoxid unter den gleichen Bedingungen zudosiert.

Nach erneutem Rühren bis zur Druckkonstanz, Abkühlen auf 80°C und dreimaligem Spülen mit Stickstoff wurde der Ansatz bei 100-110°C 5 h mit Wasserdampf gestrippt. Das alkoxylierte Polyethylenimin wurde dann in eine 70 gew.-%ige wäßrige Lösung überführt, die bei den folgenden Versuchen eingesetzt wurde.

Dabei bedeuten:
B1: PEI 3000/3PO/27EO
B2: PEI 3000/1PO/29EO
B3: PEI 3000/6PO/24EO
B4: PEI 3000/10PO/20EO
B5: PEI 3000/3BuO/27EO
B6: PEI 3000/1BuO/29EO

### A) Herstellung und Prüfung von erfindungsgemäßen Rußdispersionen

### Beispiel 1 bis 8

Eine Mischung von 8 g (bzw. 20 g in Beispiel 6 bis 8) des Rußpigments A, 1 g des Dispergiermittels B1 (70 gew.-%ige wäßrige Lösung, ber. 100%) und 190,6 g (bzw. 178,6 g in Beispiel 6 bis 8) Wasser wurde bei 23°C 2 min mit einem Ultra Turrax T25 (Fa. Janke und Kunkel) bei 800 U/min dispergiert.

Nach 1 min wurde die Viskosität der erhaltenen Rußdispersionen in einem Viskosimeter DV II (Spindel 61-63, Fa. Brookfield) gemessen.

Einzelheiten zu diesen Versuchen sowie deren Ergebnisse sind in Tabelle 1 zusammengestellt. Zum Vergleich sind die ohne das Dispergiermittel B1 erhaltenen Viskositäten (Beispiele 1V bis 8V) mit aufgeführt.

Dabei bedeuten:
DBP: Dibutylphthalatabsorption
PS: mittlere Teilchengröße

**Tabelle 1**

| Bsp | Rußpigment A | | | Konzentration Rußdispersion | Viskosität [mPas] |
|---|---|---|---|---|---|
| | DBP [ml/100g] | BET [m²/g] | PS [nm] | | |
| 1 | 55 | 90 | 25 | 4 Gew.-% | 2,5 |
| 1V | 55 | 90 | 25 | 4 Gew.-% | 12,0 |
| 2 | 74 | 210 | 17 | 4 Gew.-% | 8,0 |
| 2V | 74 | 210 | 17 | 4 Gew.-% | 22,0 |
| 3 | 100 | 560 | 13 | 4 Gew.-% | 2,5 |
| 3V | 100 | 560 | 13 | 4 Gew.-% | 10,0 |
| 4 | 114 | 115 | 21 | 4 Gew.-% | 2,8 |
| 4V | 114 | 115 | 21 | 4 Gew.-% | 90,0 |
| 5 | 124 | 87 | 27 | 4 Gew.-% | 3,0 |
| 5V | 124 | 87 | 27 | 4 Gew.-% | 150,0 |
| 6 | 55 | 90 | 25 | 10 Gew.-% | 12,2 |
| 6v | 55 | 90 | 25 | 10 Gew.-% | 93,0 |
| 7 | 74 | 210 | 17 | 10 Gew.-% | 118,0 |
| 7V | 74 | 210 | 17 | 10 Gew.-% | 227,0 |
| 8 | 100 | 560 | 13 | 10 Gew.-% | 55,9 |
| 8V | 100 | 560 | 13 | 10 Gew.-% | 140,0 |

### Beispiel 9 bis 19

Eine Mischung von 4,5 g des Rußpigments A, 4,5 g des Dispergiermittels B (70 gew.-%ige wäßrige Lösung, ber. 100%), 1,5 g Di-1,2-propylenglykol, 0,12 g einer 50 gew.-%igen wäßrigen Lösung von Glutardialdehyd, 0,15 g einer 47 gew.-%igen wäßrigen Lösung von Tetramethylolacetylendiharnstoff, 0,3 g Triethanolamin und 18,9 g Wasser wurde in einem 100 ml-Schraubdeckelglas mit 30 g Glaskugeln (0,25 - 0,5 mm Durchmesser) 2 h auf einem Skandexgerät geschüttelt und danach mit Wasser auf einen Rußgehalt von 1 Gew.-% verdünnt.

Anschließend wurde mit dem Teilchengrößenmeßgerät Coulter LS 230 die mittlere Teilchengröße (d₅₀) der Rußpartikel in der jeweils erhaltenen Rußdispersion bestimmt.

Dann wurde die jeweils erhaltene Rußdispersion mit einer 10 µm-Rakel auf oberflächenbeschichtetes Papier (Paper for 720 dpi Printing, Epson) aufgerakelt. Die optische Dichte der Rakelung wurde mit einem Spektralphotometer Datacolor 600+ mit Ulbirchtkugel ohne Glanz (geöffnete Glanzfalle) bei 530 nm gemessen.

Weitere Einzelheiten zu diesen Versuchen sowie deren Ergebnisse sind in Tabelle 2 zusammengestellt.

### Beispiel 20 bis 25

Es wurde analog Beispiel 9 bis 19 vorgegangen, jedoch mit verdoppeltem Ansatz und unter Verwendung von 1,2-Propylenglykol anstelle von Di-1,2-propylenglykol.

Die Rüßteilchengröße in den 1 gew.-%igen Dispersionen sowie die optische Dichte der Rakelungen wurden wie in Beispiel 9 bis 19 gemessen.

Zusätzlich wurde die Dispersionsstabilität der Dispersionen untersucht. Alle Dispersionen waren nach siebenwöchiger Lagerung bei 60°C und anschließender vierwöchiger Lagerung bei -5°C unverändert homogen.

Weitere Einzelheiten zu diesen Versuchen sowie deren Ergebnisse sind ebenfalls in Tabelle 2 zusammengestellt.

**Tabelle 2**

| Bsp | Rußpigment A | | | B | optische Dichte |
|---|---|---|---|---|---|
| | DBP [ml/100g] | BET [m²/g] | PS [nm] | | |
| 9 | 170 | 320 | 67 | B1 | 1,13 |
| 10 | 145 | 350 | 122 | B1 | 1,17 |
| 11 | 160 | 260 | 128 | B1 | 1,20 |
| 12 | 150 | 550 | 83 | B1 | 1,18 |
| 13 | 160 | 300 | 122 | B1 | 1,15 |
| 14 | 114 | 115 | 106 | B1 | 1,29 |
| 15 | 95 | 300 | 125 | B1 | 1,23 |
| 16 | 104 | 343 | 120 | B1 | 1,18 |
| 17 | 50 | 240 | 93 | B1 | 1,15 |
| 18 | 50 | 70 | 107 | B1 | 1,18 |
| 19 | 67 | 270 | 73 | B1 | 1,17 |
| 20 | 104 | 343 | 120 | B1 | 1,19 |
| 21 | 104 | 343 | 120 | B2 | 1,18 |
| 22 | 104 | 343 | 120 | B3 | 1,16 |
| 23 | 104 | 343 | 120 | B4 | 1,16 |
| 24 | 104 | 343 | 120 | B5 | 1,13 |
| 25 | 104 | 343 | 120 | B6 | 1,20 |

### B) Herstellung und Prüfung einer erfindungsgemäßen Ink-Jet-Tinte

### Beispiel 26

Eine Mischung von 60 g Ruß (Monarch 1000 der Cabot Corporation; BET-Oberfläche 340 m²/g; DBP-Absorption 104 cm³/g), 60 g des Dispergiermittels B1, 20 g 1,2-Propylenglykol, 1,6 g einer 50 gew.-%igen wäßrigen Lösung von Glutardialdehyd, 5 g einer 47 gew.-%igen wäßrigen Lösung von Tetramethylolacetylendiharnstoff und 5 g Triethanolamin wurde mit vollentsalztem Wasser zum Gesamtgewicht von 400 g aufgefüllt und in einer Rührwerkskugelmühle bei einer Umfangsgeschwindigkeit von 10 m/s in 2 h auf eine Teilchenfeinheit (d₅₀-Wert) von 57 nm dispergiert.

Zur Endeinstellung (4 gew.-%ige Zubereitung) wurden 40 g Mahlgut mit 10 g Triethylenglykolmonobutylether und 10 g Polytetrahydrofuran 250 (BASF) versetzt, mit Wasser bis zu einem Gesamtgewicht von 100 g aufgefüllt, gemischt und über ein Sieb mit einer Porengröße von 1 µm filtriert.

Die erhaltene Tinte wurde unter Verwendung eines handelsüblichen Ink-Jet-Druckers der Firma Hewlett-Packard (HP Desk Jet 510, Kartusche 51629A) auf a) ungestrichenes Papier (Laser Copier, 80 g/m², Intercopy) und b) auf oberflächenbeschichtetes Papier (Paper for 720 dpi Printing, Epson) verdruckt.

In beiden Fällen wurde ein streifenfreies gleichmäßiges Druckbild (optische Dichte: a) 1,02; b) 1,39) erhalten.

Auch nach dreitägiger offener Lagerung der Kartusche zeigte die erfindungsgemäße Tinte ein ausgezeichnetes Wiederanschreibverhalten.

## Patentansprüche

1. Pigmentzubereitungen, enthaltend
A) mindestens ein organisches oder anorganisches Pigment und
B) mindestens ein Polyethylenimin, das ethoxyliert und propoxyliert und/oder butoxyliert ist und das pro Mol N-H-Funktion 1 bis 10 mol Propylenoxid- oder Butylenoxideinheiten und 10 bis 40 mol Ethylenoxideinheiten aufweist, wobei das Polyethylenimin vor der Alkoxylierung ein mittleres Molekulargewicht M_{w} von 600 bis 25 000 g/mol aufweist.

2. Pigmentzubereitungen nach Anspruch 1, die als Komponente (B) ein Polyethylenimin enthalten, das zunächst propoxyliert oder butoxyliert und anschließend ethoxyliert wurde.

3. Pigmentzubereitungen nach den Ansprüchen 1 oder 2, die, bezogen auf das Gewicht des Pigmentes (A), 5 bis 200 Gew.-% des Dispergiermittels (B) enthalten.

4. Verwendung der Pigmentzubereitungen gemäß den Ansprüchen 1 bis 3 zur Herstellung von wäßrigen Pigmentdispersionen, Tinten, Druckfarben, Lacken und Tonern.

5. Pigmentzubereitungen für das Ink-Jet-Verfahren, enthaltend
A) mindestens ein organisches oder anorganisches Pigment,
B) mindestens ein Dispergiermittel auf der Basis von Polyethylenimin, das ethoxyliert und propoxyliert und/oder butoxyliert ist und das pro Mol N-H-Funktion 1 bis 10 mol Propylenoxid- oder Butylenoxideinheiten und 10 bis 40 mol Ethylenoxideinheiten aufweist, wobei das Polyethylenimin vor der Alkoxylierung ein mittleres Molekulargewicht M_{w} von 600 bis 25 000 g/mol aufweist, und
C) ein wäßriges Tintenmedium.

6. Pigmentzubereitungen nach Anspruch 5, die als Komponente (C) Wasser (C1) im Gemisch mit einem oder mehreren schwerverdampfbaren, in Wasser löslichen oder mit Wasser mischbaren organischen Lösungsmitteln (C2) enthalten.

7. Pigmentzubereitungen nach Anspruch 6, die als organisches Lösungsmittel (C2) ein oder mehrere Lösungsmittel aus der Gruppe Polytetrahydrofuran mit einem mittleren Molekulargewicht M_{w} von 150 bis 500 g/mol, mehrwertige Alkohole, Polyethylen- und Polypropylenglykole und deren Monoalkylether, Pyrrolidon und N-Alkylpyrrolidone enthalten.

8. Pigmentzubereitungen nach den Ansprüchen 5 bis 7, enthaltend
0,01 bis 20 Gew.-% der Komponente (A),
0,01 bis 20 Gew.-% der Komponente (B),
mindestens 50 Gew.-% der Komponente (C1) und
0,1 bis 40 Gew.-% der Komponente (C2).

## Claims

1. Pigment preparations comprising
A) at least one organic or inorganic pigment and
B) at least one ethoxylated and propoxylated and/or butoxylated polyethyleneimine containing from 1 to 10 mol of propylene oxide or butylene oxide units and from 10 to 40 mol of ethylene oxide units per mole of N-H function, wherein said polyethyleneimine had a pre-alkoxylation average molecular weight M_{w} of from 600 to 25 000 g/mol.

2. Pigment preparations as claimed in claim 1, wherein said component (B) is an initially propoxylated or butoxylated and then ethoxylated polyethyleneimine.

3. Pigment preparations as claimed in claim 1 or 2 containing based on the weight of pigment (A) from 5 to 200% by weight of dispersant (B).

4. Use of the pigment preparations of any of claims 1 to 3 for producing aqueous pigment dispersions, inks, including printing inks, paints and toners.

5. Pigment preparations for the ink-jet process, comprising
A) at least one organic or inorganic pigment,
B) at least one dispersant based on ethoxylated and propoxylated and/or butoxylated polyethyleneimine containing from 1 to 10 mol of propylene oxide or butylene oxide units and from 10 to 40 mol of ethylene oxide units per mole of N-H function, wherein said polyethyleneimine had a pre-alkoxylation average molecular weight M_{w} of from 600 to 25 000 g/mol, and
C) an aqueous ink medium.

6. Pigment preparations as claimed in claim 5, wherein said component (C) is water (C1) mixed with one or more high-boiling water-soluble or -miscible organic solvents (C2).

7. Pigment preparations as claimed in claim 6, including as organic solvent (C2) one or more solvents selected from the group consisting of polytetrahydrofuran having an average molecular weight M_{w} of from 150 to 500 g/mol, polyhydric alcohols, polyethylene glycols, polypropylene glycols, polyethylene glycol monoalkyl ethers, polypropylene glycol monoalkyl ethers, pyrrolidone and N-alkylpyrrolidones.

8. Pigment preparations as claimed in any of claims 5 to 7, comprising
from 0.01 to 20% by weight of component (A),
from 0.01 to 20% by weight of component (B),
at least 50% by weight of component (C1), and
from 0.1 to 40% by weight of component (C2).

## Revendications

1. Compositions pigmentaires contenant
A) au moins un pigment organique ou minéral et
B) au moins une polyéthylnimine, éthoxylée et propoxylée et/ou butoxylée, et contenant, par mole de fonction NH, 1 à 10 mol de motifs d'oxyde de propylène ou d'oxyde de butylène et 10 à 40 mol de motifs d'oxyde d'éthylène, la polyéthylénimine ayant, avant l'alcoxylation, un poids moléculaire moyen M_{w} de 600 à 25 000 g/mol.

2. Compositions pigmentaires selon la revendication 1, contenant, en tant que composant B), une polyéthylénimine qui a été d'abord propoxylée ou butoxylée puis éthoxylée.

3. Compositions pigmentaires selon les revendications 1 ou 2, contenant, par rapport au poids du pigment A), 5 à 200 % en poids de l'agent dispersant B).

4. Utilisation des compositions pigmentaires selon les revendications 1 à 3 pour la préparation de dispersions aqueuses de pigments, d'encres, d'encres d'impression, de peintures et de toners.

5. Compositions pigmentaires pour le procédé par jet d'encre, contenant
A) au moins un pigment organique ou minéral,
B) au moins un agent dispersant à base d'une polyéthylénimine qui est éthoxylée et propoxylée et/ou butoxylée, contenant, par mole de fonction NH, 1 à 10 mol de motifs d'oxyde d'éthylène, la polyéthylénimine ayant, avant l'alcoxylation, un poids moléculaire moyen M_{w} de 600 à 25.000 g/mol, et
C) un milieu aqueux pour encre.

6. Compositions pigmentaires selon la revendication 5, contenant, en tant que composant C), de l'eau (C1) en mélange avec un ou plusieurs solvants organiques (C2) peu volatils, solubles dans l'eau ou miscibles à l'eau.

7. Compositions pigmentaires selon la revendication 6, contenant, en tant que solvants organiques (C2) un ou plusieurs solvants du groupe du polytétrahydrofuranne à un poids moléculaire moyen M_{w} de 150 à 500 g/mol, des alcools polyvalents, des polyéthylène- et polypropylène-glycols et leurs éthers monoalkyliques, de la pyrrolidone et des N-alkylpyrrolidones.

8. Compositions pigmentaires selon les revendications 5 à 7, contenant :
- 0,01 à 20 % en poids du composant A),
- 0,01 à 20 % en poids du composant B),
- au moins 50 % en poids du composant C1), et
- 0,1 à 40 % en poids du composant C2).
